Europäisches Patentamt

European Patent Office

Office européen des brevets

(19)

(11) EP 0 896 496 A1

(12) DEMANDE DE BREVET EUROPEEN

(43) Date de publication:
10.02.1999 Bulletin 1999/06

(51) Int Cl.6: H04Q 11/04

(21) Numéro de dépôt: 98401925.7

(22) Date de dépôt: 28.07.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 05.08.1997 FR 9710016

(71) Demandeur: THOMSON-CSF
75008 Paris (FR)

(72) Inventeurs:
• Seng-Ou, Tong
94117 Arcueil Cedex (FR)
• Calvet, Bruno
94117 Arcueil Cedex (FR)

(74) Mandataire: Courtellemont, Alain
Thomson-CSF Propriété Intellectuelle,
13, Avenue du Président Salvador Allende
94117 Arcueil Cédex (FR)

(54) Procédé de maintien de l'intégrité binaire d'une information numérique émise par un émetteur vers un récepteur via un réseau

(57) L'invention concerne les procédés de maintien de l'intégrité binaire d'une information numérique formatée sous forme de cellules et émise par un émetteur vers un récepteur via un réseau.

Le procédé consiste à transférer les cellules reçues du réseau (1) dans une file d'attente anti-gigue (22) et à maintenir un niveau donné de remplissage autour d'une valeur déterminée (pm) d'une profondeur moyenne pour filtrer et compenser des perturbations (2) de transmission dues au réseau (1).

Application, en particulier, à des réseaux ATM.

$$N = (r + p) = r_m + p_m = \text{CONSTANT}$$

FIG.3

Printed by Jouve, 75001 PARIS (FR)

## Description

La présente invention se rapporte à un procédé de maintien de l'intégrité binaire d'une information numérique émise par un émetteur vers un récepteur via un réseau.

Elle permet de garantir que le récepteur reçoit une information numérique composée d'un nombre de bits identique à celui de l'information numérique émise par l'émetteur et transmise par le réseau, du type asynchrone notamment, par exemple un réseau ATM, soumis à des perturbations.

Les études de systèmes de télécommunication font de plus en plus appel à un mode de transfert appelé ATM, abréviation anglo-saxonne pour Asynchronous Transfer Mode. Cette technique permet de véhiculer des informations numériques de nature et de débit aussi variés qu'irréguliers (par exemple voix, vidéo, fichiers). L'information est transportée à travers un réseau pouvant être de diverses topologies (par exemple maillage, anneau, étoile, etc.). Chaque noeud du réseau, appelé commutateur ATM, est relié au noeud adjacent par une artère de transmission acceptant tous types de technologies (câble, faisceau hertzien, fibre optique, etc.).

Le mode de transfert ATM met en oeuvre une technique de commutation et une technique de transfert asynchrone pour la transmission d'informations par un réseau. Ces techniques sont basées sur le principe de transmission par paquets d'information de longueur fixe, appelé cellule ATM. Ce principe consiste à segmenter les données issues d'un émetteur en blocs de longueur fixe et d'ajouter à chaque bloc un en-tête pour former une cellule ATM. Les cellules ATM provenant de différents émetteurs sont multiplexées et transmises de façon asynchrone par les artères du réseau vers leur destination. Le transfert est asynchrone car les cellules transmises sont repérées seulement par leur adresse logique et non par leur position temporelle ou leur rang à l'intérieur d'une trame périodique, comme c'est le cas dans un transfert synchrone. Dans un transfert asynchrone il n'y a donc aucun lien entre l'information contenue dans les cellules et le temps.

Dans les réseaux de communication, la mise en oeuvre d'un mode de transfert ATM, et plus généralement d'un mode de transfert asynchrone, introduit une variation du temps de transit, appelé gigue ATM, lors de la transmission d'informations. Le temps de transit est le temps écoulé entre l'émission de l'information par un émetteur et la réception de l'information par un récepteur. Cette variation du temps de transit est introduite principalement par les variations de charge du réseau qui ont pour effet de faire varier le taux de remplissage des files d'attente aux noeuds de commutation du réseau. L'amplitude maximale de la gigue ATM est un paramètre estimable à partir des paramètres du réseau et du débit des communications. Un deuxième phénomène, appelé plésiochronisme, est spécifique d'un mode de transfert asynchrone. Ce phénomène caractérise la dérive lente des horloges implantées au niveau des abonnés au réseau. Ces deux phénomènes temporels ont pour effet de remplir et/ou de vider les files d'attente implantées côté réception du réseau. Les cas pour lesquels une file d'attente servant un récepteur est vide ou pleine entraînent une perte de l'intégrité binaire de l'information transmise au récepteur.

A ces phénomènes temporels s'ajoutent des erreurs de transmission provoquées par un environnement de fonctionnement perturbé. Les perturbations peuvent être dues, par exemple, à des phénomènes d'évanouissement, ou fading suivant la terminologie anglo-saxonne, lors de la transmission par faisceau hertzien. Ces perturbations peuvent avoir diverses conséquences, telles des pertes de cellules, telles des cellules erronées ou telles des cellules insérées à tort. Des techniques existent afin de corriger un certain nombre d'erreurs. Mais ces techniques se heurtent au problème lié à la perte ou l'ajout de cellules, c'est-à-dire le problème de la perte de l'intégrité binaire, qui limite l'efficacité des algorithmes de correction d'erreurs pouvant être mis en oeuvre. Pour augmenter leur efficacité, il est connu des techniques pour remplacer des cellules perdues par des cellules de bourrage et pour purger des cellules lors d'ajout de cellules. Le développement de ces techniques s'est accompagné de l'introduction du terme intégrité binaire. L'intégrité binaire est définie par l'absence d'insertion ou de suppression d'éléments d'information dans le flot des données transmises. En particulier, dans les réseaux ATM, l'intégrité binaire est maintenue lorsque :

- le nombre de cellules de bourrage compense le nombre de cellules perdues dans le réseau,
- le nombre de cellules purgées correspond au nombre de cellules insérées à tort.

Un des algorithmes connus pour maintenir l'intégrité binaire d'une information transmise dans un réseau ATM est défini par l'ETSI (abréviation pour European Telecommunications Standard Institute) et est décrit dans un document I-ETS 300 353 d'avril 1995. Par un rapport de septembre 1995 COM 13-R 51-F l'UIT, Union Internationale des Télécommunications, a communiqué un projet de nouvelles recommandations et de recommandations révisées concernant en particulier la norme UIT-T 1.363.1 qui spécifie la couche d'adaptation ATM (AAL) du RNIS-LB de type 1 dans laquelle est implanté l'algorithme défini par l'ETSI. Nous noterons cette couche AAL1. Au travers de cet algorithme, la couche AAL1 gère la perte ou l'insertion accidentelle de cellules. Plus particulièrement destiné aux réseaux civils, cet algorithme ne traite pas de nombreux cas d'erreurs fréquents en environnement perturbé auquel sont soumis des réseaux militaires. Ainsi, en particulier, l'algorithme ne traite pas :

- la réception de deux cellules invalides consécutives,
- la réception de deux cellules hors-séquence consécutives,
- la perte de plus de six cellules consécutives,
- l'insertion de plus d'une cellule.

Dans ces conditions, il est difficile d'établir des communications cryptées, de mettre en oeuvre des procédés de correction des erreurs dans les informations reçues et d'établir des procédés de correction des informations perdues.

L'invention se propose de remédier aux problèmes précédents.

A cet effet, l'invention a pour objet un procédé de maintien de l'intégrité binaire d'une information numérique, correspondant à une application donnée émise avec un débit continu, formatée sous forme de cellules repérées par un numéro de séquence transmises suivant une transmission de type asynchrone entre un émetteur et un récepteur communicant au moyen d'un réseau caractérisé en ce qu'il consiste :

à dimensionner une file d'attente anti-gigue par le choix d'une profondeur maximale de remplissage déterminée en fonction de paramètres du réseau et d'un débit de communication et par le choix d'une valeur déterminée d'une profondeur moyenne de remplissage,
à transférer, dans la file d'attente anti-gigue les cellules reçues constituant l'information numérique issues du réseau à destination du récepteur,
et à maintenir un niveau donné de remplissage de la file d'attente anti-gigue autour de la valeur déterminée de la profondeur moyenne pour filtrer et compenser des perturbations de transmission dues au réseau.

L'invention a pour avantage de garantir le maintien de l'intégrité binaire d'une application émise et reçue à débit constant via un support de transmission asynchrone. Elle permet ainsi la mise en oeuvre, de procédés de correction des erreurs dans les informations reçues, de procédés de correction des informations perdues. Elle permet enfin d'établir des communications cryptées.

D'autres caractéristiques et avantages de la présente invention apparaîtront plus clairement lors de la description qui suit présentée à titre d'illustration non limitative et faite en regard des figures annexées qui représentent:

- la figure 1, un réseau dans lequel est mis en oeuvre un procédé selon l'invention,
- la figure 2, un format standard proposé par l'ETSI d'une cellule ATM du type 1,
- la figure 3, un schéma d'un dispositif mettant en oeuvre le procédé de maintien de l'intégrité binaire selon l'invention,
- la figure 4, une densité de probabilité P(r) du nombre instantané r de cellules restant dans le réseau,
- la figure 5, une densité de probabilité P(p) de la profondeur instantanée p de la file d'attente anti-gigue,
- la figure 6, la densité de probabilité $P(\tau)$ de l'écart instantané $\tau$ entre la profondeur instantanée p et la profondeur moyenne pm de la file d'attente anti-gigue,
- la figure 7, une densité de probabilité $P(\tau)$ après une perte ou une insertion à tort de P cellules non compensées,
- la figure 8, une densité de probabilité P(p) pour une perte ou une insertion à tort de P cellules,
- la figure 9, une densité de probabilité $P(\tau)$ résumant de manière schématique différentes étapes du procédé selon l'invention,
- la figure 10, un organigramme du sous-traitement des cellules reçues du réseau,
- la figure 11, un organigramme du sous-traitement effectué avant l'émission d'une cellule vers le récepteur.

Sur les différentes figures, les éléments homologues sont représentés avec une même référence numérique ou alphanumérique.

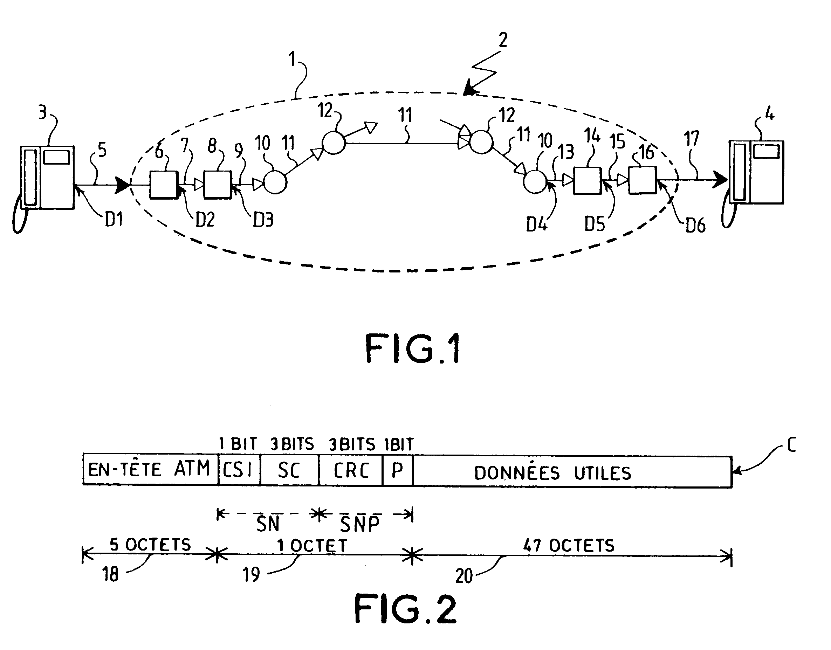

La figure 1 représente un réseau 1 soumis à des perturbations 2 dans lequel est mis en oeuvre un procédé selon l'invention. Lors d'une communication entre un émetteur 3 et un récepteur 4, l'émetteur 3 émet une information numérique D1 au moyen d'un premier lien déterminé 5, une ligne numérique par exemple du type RNIS (abréviation pour Réseau Numérique à Intégration de Services), à accès vers le réseau 1. Le réseau 1, de type ATM par exemple, comprend à une extrémité un module de numérotation de blocs d'information 6 relié par une liaison numérique 7 à un module d'assemblage de cellules 8 relié par une liaison numérique 9 à un noeud 10. L'information numérique D3 émise à l'extrémité du réseau côté émission est transmise par le réseau par des artères 11 et aiguillées par des noeuds 12 jusqu'à un noeud 10 situé à une autre extrémité du réseau. L'information numérique D4 en réception du réseau est transmise du noeud 10 à un module de desassemblage de cellules 14 relié par une liaison numérique 15 à un dispositif 16 mettant en oeuvre le procédé selon l'invention. Après traitement par le dispositif 16, l'information numérique traitée D6 est transmise au récepteur 4 au moyen d'un deuxième lien déterminé 17, une ligne numérique du type RNIS par exemple. Dans un réseau 1 de type ATM, l'information numérique transmise D3 par les artères 11 du réseau 1 est formatée sous la forme de cellules de longueur fixe dénommées cellules ATM.

La figure 2 correspond à un format standard proposé par l'ETSI d'une cellule C ATM de type 1. La cellule C ATM de type 1 est composée de :

- cinq octets 18 d'en-tête ATM
- un octet 19 réservé à la numérotation des cellules qui comprend :

  - un bit CSI, indiquant la capacité des données utiles (CSI = 0 signifie qu'il y a 47 octets d'information utile),
  - trois bits d'un compteur SC qui compte les cellules émises (les 4 bits CSI et SC sont globalement appelés SN),
  - trois bits CRC qui représentent un code de redondance des 4 bits SN,
  - et un bit P de parité paire de l'octet (les 4 bits CRC et P sont globalement appelés SNP).

- 47 octets 20 d'information utile.

Les cellules C ainsi décrites, hormis les cinq octets 18 d'en-tête ATM extraits des cellules par le module de désassemblage de cellules 14, sont traitées dans le dispositif mettant en oeuvre le procédé selon l'invention avant d'être transmises au récepteur.

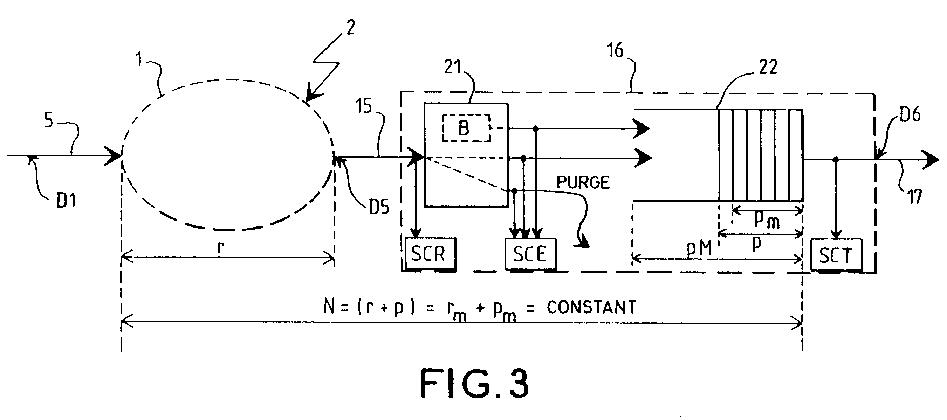

La figure 3 représente schématiquement un dispositif mettant en oeuvre le procédé selon l'invention de maintien de l'intégrité binaire. Le dispositif 16 comprend un logiciel de traitement 21, une file d'attente anti-gigue 22 et trois compteurs : un premier compteur SCR, un deuxième compteur SCE et un troisième compteur SCT. Le logiciel de traitement 21 traite les cellules reçues D5 du réseau et contrôle la file d'attente anti-gigue 22. La file d'attente anti-gigue 22 mémorise les cellules transférées par le traitement et émet une information numérique D6 vers le récepteur, au rythme de lecture du récepteur. L'information numérique D6 émise peut avoir différents formats. Ainsi, elle peut correspondre aux cellules ou bien elle peut être formatée par exemple sous forme de bits, d'octets, de mots de 16, 32 bits,...Par exemple dans le cas de cellules ATM de format standard la file d'attente anti-gigue peut émettre sous forme d'octets l'information numérique contenue dans une cellule. Dans ces conditions, la cellule est considérée émise quand les 47 octets du champ données ont été émis. Le rythme de transmission des cellules entre le réseau 1 et le dispositif 16 est variable en fonction des perturbations 2 affectant le réseau 1. Par contre le dispositif 16 émet une information numérique D6 vers le récepteur à intervalles réguliers, au rythme de lecture du récepteur. Pour maintenir l'intégrité binaire de l'information numérique reçue par le récepteur, le procédé selon l'invention met en oeuvre trois compteurs. Le premier compteur SCR est associé aux cellules D5 reçues du réseau 1. Ainsi dans l'exemple de cellules ATM de format standard le premier compteur SCR est positionné à la valeur SC de la cellule. Le deuxième compteur SCE compte les cellules transférées dans la file d'attente anti-gigue 22. Le troisième compteur SCT compte les cellules D6 émises par la file d'attente anti-gigue 22 vers le récepteur. Le modulo des compteurs SCE et SCT est choisi le plus grand possible (par exemple modulo $2^{16}$=65536).

Dans un premier temps, pour faciliter la compréhension du traitement, les hypothèses suivantes sont prises :

- la file d'attente anti-gigue est correctement dimensionnée pour absorber la gigue ATM. L'amplitude maximale de la gigue ATM étant un paramètre estimable il est ainsi possible de dimensionner correctement la file d'attente anti-gigue en lui donnant une profondeur maximale pM (figure 3) supérieure à l'amplitude maximale estimée de la gigue ATM. La profondeur maximale pM de la file d'attente anti-gigue correspond à la capacité en nombre de cellules de la file d'attente anti-gigue 22. Par ailleurs lors d'une phase d'initialisation, la file d'attente anti-gigue 22 est initialement remplie par des cellules de bourrage B. Cette phase d'initialisation est déclenchée par le début du transfert de l'information numérique entre l'émetteur et le récepteur. Le nombre de cellules de bourrage introduites dans la file d'attente anti-gigue est égal à une valeur déterminée. Cette valeur déterminée est, par exemple, égale à la moitié de la profondeur maximale pM de la file d'attente anti-gigue.
- la gigue ATM est gaussienne et centrée.
- le rythme d'émission des cellules vers le récepteur est asservi au rythme de l'émetteur, c'est-à-dire qu'il n'y a pas de plésiochronisme, les horloges émission et réception ne dérivent pas entre elles.
- la charge du réseau est constante.
- la transmission sur le réseau se fait sans perte ni ajout de cellules.

Suivant ces hypothèses, le temps de transit instantané des cellules entre l'émetteur et le récepteur est constant, le temps de transit moyen des cellules à travers le réseau est constant et le temps de transit moyen des cellules à travers la file d'attente anti-gigue est constant.

Ceci permet finalement de conclure, en suivant l'illustration de la figure 3, que le nombre instantané N de cellules entre l'émetteur et le récepteur est constant (soit que le nombre instantané r de cellules restant dans le réseau plus le nombre instantané p de cellules restant dans la file d'attente anti-gigue est constant), que le nombre moyen rm de cellules restant dans le réseau est constant et que la profondeur moyenne pm (exprimée en nombre de cellules) de la file d'attente anti-gigue est constante et égale à la valeur déterminée du nombre de cellules de bourrage introduites dans la file d'attente anti-gigue lors de la phase d'initialisation. La profondeur moyenne de la file d'attente anti-gigue correspond au nombre moyen de cellules restant dans la file d'attente anti-gigue.

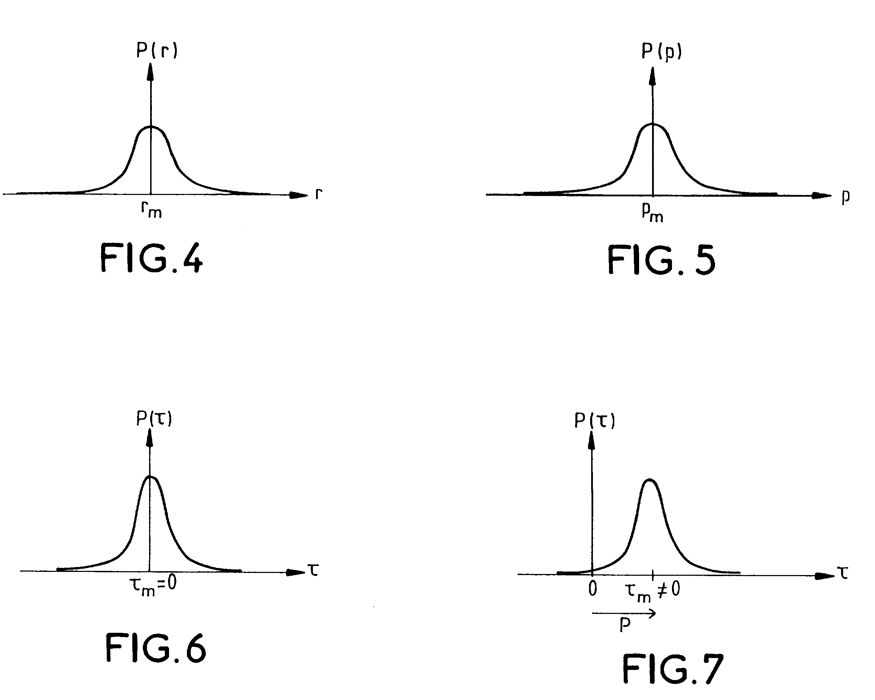

Toujours dans ces conditions, la figure 4 représente la densité de probabilité P(r) du nombre instantané r de cellules restant dans le réseau et la figure 5 représente la densité de probabilité P(p) de la profondeur instantanée p de la file d'attente anti-gigue. La profondeur instantanée p de la file d'attente anti-gigue correspond au nombre instantané de cellules restant dans la file d'attente anti-gigue.

La densité de probabilité P(r) du nombre instantané r de cellules restant dans le réseau est gaussienne car la gigue ATM est gaussienne. Pour la même raison, la densité de probabilité P(p) de la profondeur instantanée p de la file d'attente anti-gigue est aussi gaussienne. La densité de probabilité P(r) est centrée sur le nombre moyen rm de cellules restant dans le réseau. La densité de probabilité P(p) est centrée sur la profondeur moyenne pm.

Ainsi, dans la limite des hypothèses prises l'écart instantané $\tau$ entre la profondeur instantanée p et la profondeur moyenne pm a une densité de probabilité P($\tau$) qui est gaussienne et centrée sur une valeur moyenne $\tau$m nulle comme illustrée sur la figure 6.

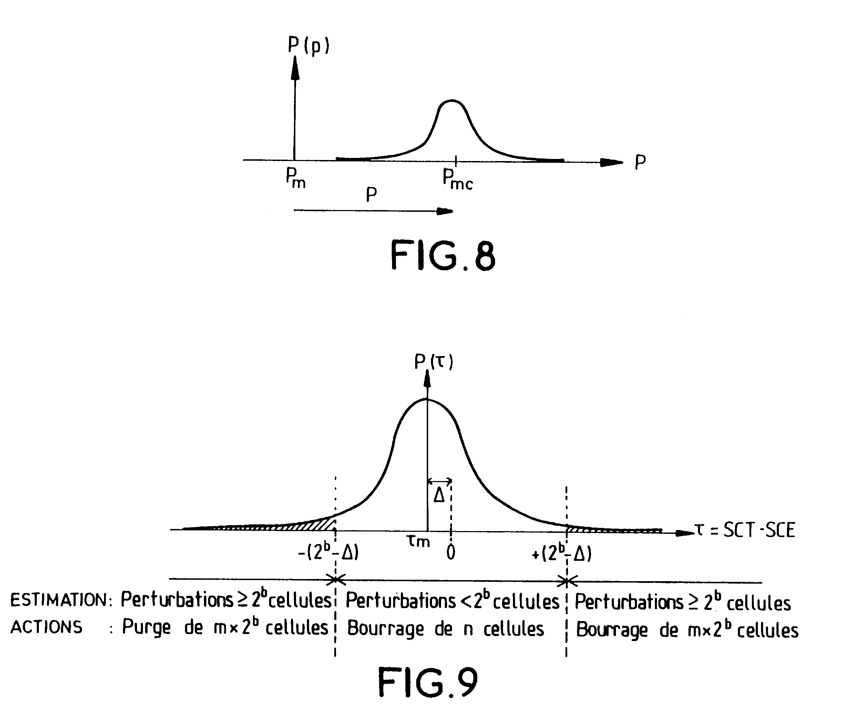

Mais, lors de perturbations sur le réseau, il peut y avoir des pertes de cellules ou des cellules insérées à tort. Dans ces conditions, il y a perte de l'intégrité binaire de l'information numérique transmise, et par conséquent l'écart moyen $\tau$m est non nul et la profondeur moyenne prend une valeur courante Pmc différente de Pm. Pour une perte de P cellules ou une insertion à tort de P cellules, l'écart moyen et la profondeur moyenne se déplace de la valeur P. Cet effet est illustré à la figure 7 et à la figure 8 qui correspondent à une perte de P cellules.

Dans ces conditions, pour garantir l'intégrité binaire le procédé est le suivant :

- la file d'attente anti-gigue, réceptionne les cellules C en provenance du réseau,
- le logiciel de traitement contrôle la validité de chaque cellule C reçue en exploitant, par exemple dans le cas d'une cellule ATM de format standard, les champs SN et SNP de la cellule. Le premier compteur SCR est positionné à la valeur du compteur SC de chaque cellule reçue valide.

Le traitement démarre à la réception de la première cellule C valide et déclenche une phase d'initialisation pendant laquelle :

- des cellules de bourrage sont transférées dans la file d'attente anti-gigue pour la remplir à une valeur déterminée égale, par exemple, à la moitié de la profondeur maximale pM, et
- le deuxième compteur SCE et le troisième compteur SCT sont initialisés à la valeur du premier compteur SCR.

Après la phase d'initialisation, le procédé tend à maintenir l'écart moyen $\tau$m proche de la valeur zéro. Lors de perturbations sur le réseau, l'écart moyen $\tau$m

se déplace de la valeur P. Cette valeur peut s'écrire sous la forme :

$$P = m \times 2^b + n \qquad (1)$$

$2^b$ représente le modulo retenu pour numéroter les cellules, b est le nombre de bits nécessaires,
n, entier naturel, représente le nombre de cellules perdues dans le réseau, au modulo $2^b$ près,
m, entier relatif, est le nombre de fois où le modulo est dépassé après la correction de n cellules.

Ainsi pour maintenir l'écart moyen $\tau$m proche de la valeur zéro, le traitement se décompose en plusieurs étapes qui sont illustrées figure 9 et qui sont les suivantes :

- correction de « n » cellules,
- correction de « m $\times$ 2$^b$ » cellules,
- définition d'un seuil de décision,
- annulation de l'écart moyen $\tau$m,

La correction de «n» cellules consiste à synchroniser le compteur interne SCE avec le numéro de séquence des cellules reçues du réseau. Ceci est réalisé de la manière suivante :

- calcul de « n » tel que

$$n = |SCR - (SCE + 1)| \qquad (2)$$

au modulo 2$^b$ près,
- transfert de « n » cellules de bourrage dans la file d'attente « anti-gigue » si n $\neq$ 0, sinon si n = 0 alors il n'y a pas de transfert,
-
$$SCE = SCE + n \qquad (3),$$

le deuxième compteur SCE est incrémenté de la valeur n.

Ainsi, l'écart instantané $\tau$ entre la profondeur instantanée p et la profondeur moyenne pm s'exprime par la valeur :

$$\tau = SCT - SCE \qquad (4)$$

La correction de « m $\times$ 2$^b$ » cellules consiste à corriger l'erreur de modulo. Ceci est réalisé de la manière suivante :

- calcul du nombre entier « m » tel que

$$m = \frac{\tau}{2^b} \qquad (5)$$

- correction des « $m \times 2^b$ » avec comme conditions:

  si $m > 0$, alors $m \times 2^b$ cellules de bourrage sont transférées dans la file d'attente « anti-gigue »,
  si $m < 0$, alors $m \times 2^b$ cellules sont purgées de la file d'attente « anti-gigue »,
  si $m = 0$, alors il n'y a pas de correction.

- $$SCE = SCE + (m \times 2^b) \qquad (6),$$

  le deuxième compteur SCE est incrémenté de la valeur $m \times 2^b$. Lorsque $m < 0$, il s'agit d'une décrémentation d'une valeur égale à $|m| \times 2^b$.

La définition d'un seuil de décision consiste à prendre en compte la dérive de l'écart moyen « $\tau m$ » entre le deuxième compteur SCE et le troisième compteur SCT. Cette dérive de $\tau m$ peut être provoquée par les phénomènes suivants:

- les effets du plésiochronisme dans le réseau, dus à une dérive lente des horloges de l'émetteur et du récepteur,
- une variation de la charge dans les noeuds du réseau qui entraîne la variation du temps de transit moyen des cellules,
- une mauvaise initialisation du troisième compteur SCT, lors de la phase d'initialisation, provoquée par la gigue ATM,
- une erreur de calcul de $\tau m$ due à la gigue ATM et à la limitation d'une durée d'intégration de $\tau$.

En notant $\Delta$ la dérive maximale tolérée de $\tau m$, le seuil de décision SD s'exprime sous la forme :

$$SD = 2^b - \Delta \qquad (7)$$

Lorsque l'écart instantané $\tau$ entre le deuxième compteur SCE et le troisième compteur SCT dépasse le seuil de décision, soit :

$$|\tau| = |SCT-SCE| \rangle \left|2^b - \Delta\right| \qquad (8)$$

alors le procédé estime qu'une correction supplémentaire de $\pm 2^b$ cellules est nécessaire. Ainsi, en regard de la figure 9 qui représente la densité de probabilité de $\tau$ on a :

si

$$\tau \rangle \left(2^b - \Delta\right)$$

alors le traitement transfère $2^b$ cellules de bourrage dans la file d'attente « anti-gigue »
si

$$\tau \langle -\left(2^b - \Delta\right)$$

alors le traitement purge $2^b$ cellules de la file d'attente « anti-gigue »
si $|\tau| \leq \left|2^b - \Delta\right|$ alors il n'y a pas de correction supplémentaire.

L'annulation de l'écart moyen $\tau m$ consiste à annuler la dérive de l'écart moyen Tm. La dérive de l'écart moyen Tm résulte de la dérive du troisième compteur SCT par rapport au deuxième compteur SCE. Pour réduire cet écart, il faut ajuster le troisième compteur SCT après chaque réception de km cellules valides reçues du réseau. Ceci se traduit par :

- intégrer les écarts entre le deuxième compteur SCE et le troisième compteur SCT km fois:

$$\sum_{k=1}^{km} \tau k \,,$$

  avec $\tau k = (SCT - SCE)$ à chaque cellule « k » reçue valide du réseau.
- calculer l'écart moyen $\tau m$:

$$\tau m = \frac{1}{km} \times \sum_{k=1}^{km} \tau k \qquad (9)$$

- et en déduire une nouvelle valeur du troisième compteur SCT:

$$SCT = SCT + \tau m \qquad (10)$$

Le nombre d'intégration km est déterminé de façon à ce que les erreurs de calcul de $\tau m$ soient négligeables.

La mise en oeuvre du procédé peut être illustré simplement lorsque la gigue maximale crête-crête est inférieur au modulo retenu pour la numérotation des cellules. Par exemple, soit un format de cellules ATM tel que proposé par l'ETSI, soit une gigue ATM maximale crête-crête inférieure à 8 cellules et soit une file d'attente anti-gigue dont la profondeur maximale est inférieure ou égale à 8 cellules. Dans ces conditions « m » reste en permanence nul et l'annulation de « τm » n'est plus nécessaire; seules l'analyse de l'état de la file d'attente anti-gigue et la correction de « n » cellules suffisent pour maintenir l'intégrité binaire. Le traitement se déroule comme suit:

la première cellule reçue valide du réseau :

- déclenche le transfert de cellules de bourrage dans la file d'attente anti-gigue jusqu'à ce que cette dernière soit à moitié pleine,
- initialise le deuxième compteur SCE à la valeur du premier compteur SCR (le modulo du deuxième compteur SCE est égale au modulo du premier compteur SCR)

ensuite le traitement se décompose en deux sous-traitements :

- sous-traitement des cellules reçues du réseau
- sous-traitement en émission de l'information vers le récepteur.

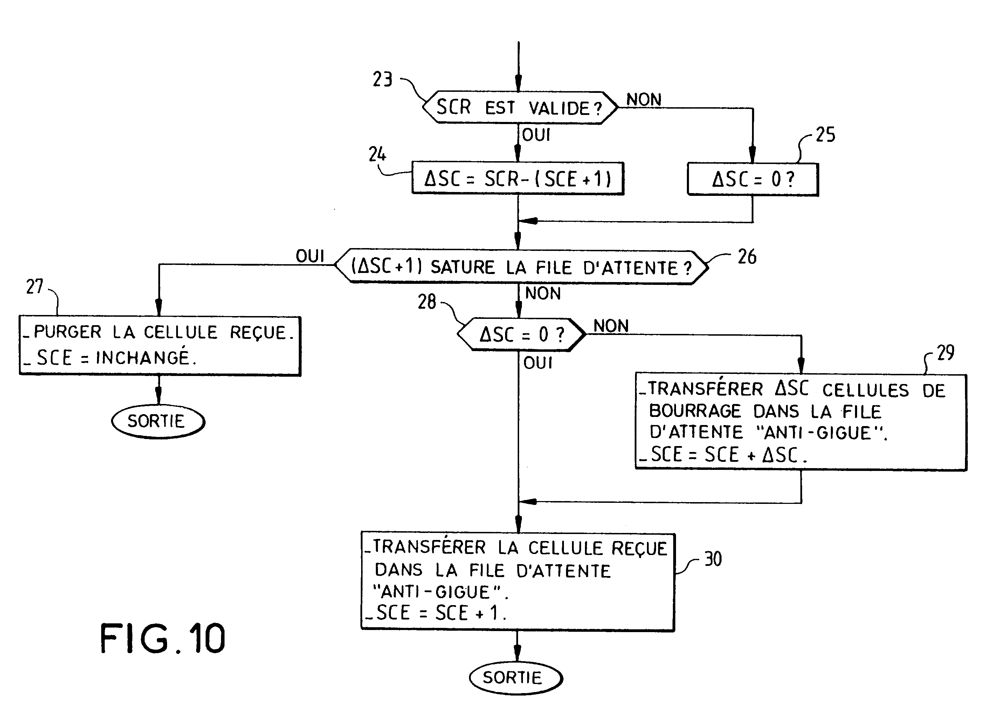

Le sous-traitement des cellules reçues du réseau est effectué suivant les étapes 23 à 30 représentées sur l'organigramme de la figure 10. A la réception d'une cellule C, le logiciel teste lors de l'étape 23 la validité du premier compteur SCR qui a été positionné à la valeur des bits SC de la cellule. Ce test de validité est effectué en comparant les bits SN et les bits SNP. Si le premier compteur SCR est détecté valide, alors le traitement détermine lors de l'étape 24 la différence ASC entre le premier compteur SCR et le deuxième compteur SCE incrémenté de un. Sinon (le premier compteur SCR est détecté invalide) le sous-traitement force la différence ASC à zéro, lors de l'étape 25 en parallèle de l'étape 24. L'étape 26 suivante est un test effectué sur le remplissage de la file d'attente anti-gigue. Le test détermine si la valeur ASC + 1 sature le file d'attente, en d'autres termes le test détermine si la valeur ASC + 1 est strictement supérieure à la capacité restante de la file d'attente anti-gigue. Si la réponse est positive, alors lors de l'étape 27 la cellule reçue C est purgée, la valeur du deuxième compteur SCE est inchangée et le sous-traitement est terminé. Par contre, si la réponse est négative alors un test supplémentaire est effectué qui correspond à l'étape 28. Le test compare la valeur ASC à zéro. Si la valeur ASC est différente de zéro, alors le sous-traitement réalisé à l'étape 29 transfère ASC cellules de bourrage dans la file d'attente anti-gigue et incrémente le deuxième compteur SCE de la quantité ASC, soit du nombre de cellules de bourrage transférées dans la file d'attente anti-gigue.

Lors de l'étape suivante 30, réalisée après l'étape 29 ou après l'étape 28 dans le cas où la valeur ASC est égale à zéro, le sous-traitement transfère la cellule reçue dans la file d'attente anti-gigue et incrémente de 1 le deuxième compteur SCE, le sous-traitement est terminé.

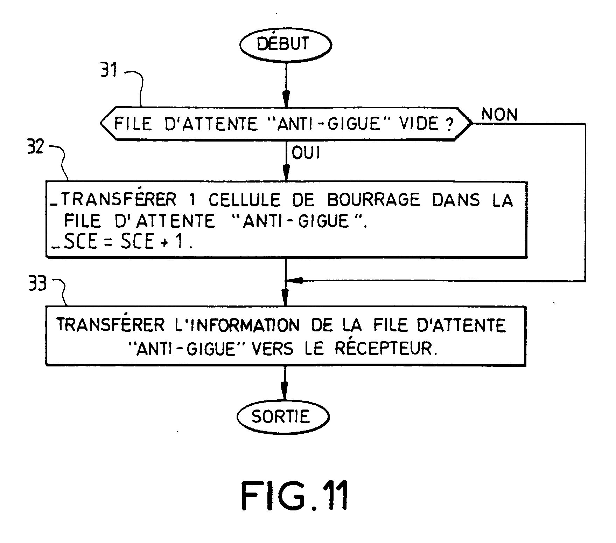

Parallèlement à la réception et au transfert de cellules dans la file d'attente anti-gigue, le procédé émet à un rythme régulier des cellules vers le récepteur en vidant la file d'attente anti-gigue. Ce rythme d'émission est imposé par le récepteur. Avant chaque émission de cellules vers le récepteur, le traitement contrôle l'état de la file d'attente anti-gigue afin d'être toujours en mesure de servir une information numérique au récepteur. Ce contrôle réalisé par le « sous-traitement en émission de l'information vers le récepteur » est schématisé par un organigramme représenté sur la figure 11. Le sous-traitement se déroule suivant les étapes 31 à 33. Avant chaque émission d'information numérique, un test de remplissage de la file d'attente anti-gigue est effectué lors de l'étape 31. Si la file d'attente anti-gigue est détectée vide, alors lors de l'étape 32, une cellule de bourrage est transférée dans la file d'attente anti-gigue et le deuxième compteur SCE est incrémenté de un. Ainsi, la file d'attente n'est pas vide et le sous-traitement peut, lors de l'étape 33, transférer l'information numérique contenue dans la file d'attente vers le récepteur suivant un format déterminé (cellule, mot, bit, ...). L'étape 33 termine le sous-traitement.

## Revendications

1. Procédé de maintien de l'intégrité binaire d'une information numérique (D1), correspondant à une application donnée émise avec un débit continu, formatée sous forme de cellules (C) repérées par un numéro de séquence transmises suivant une transmission de type asynchrone entre un émetteur (3) et un récepteur (4) communicant au moyen d'un réseau (1) caractérisé en ce qu'il consiste :

à dimensionner une file d'attente anti-gigue (22) par le choix d'une profondeur maximale (pM) de remplissage déterminée en fonction de paramètres du réseau et d'un débit de communication et par le choix d'une valeur déterminée (pm) d'une profondeur moyenne de remplissage,
à transférer (30), dans la file d'attente anti-gigue (22) les cellules (C) reçues constituant l'information numérique (D5) issues du réseau (1) à destination du récepteur (4),
et à maintenir (27) (29) (32) un niveau donné de remplissage de la file d'attente anti-gigue (22) autour de la valeur déterminée (pm) de la profondeur moyenne pour filtrer et compenser des perturbations (2) de transmission dues au réseau (1).

2. Procédé selon la revendication 1, caractérisé en ce que le maintien du niveau donné de remplissage de la file d'attente anti-gigue (22) consiste :

à remplir initialement avec des cellules de bourrage (B) la file d'attente anti-gigue (22) jusqu'à un niveau correspondant à la valeur déterminée (pm) de la profondeur moyenne de remplissage,

à calculer à des instants déterminés une valeur courante (pmc) de la profondeur moyenne de remplissage,

à traiter (24) le numéro de séquence (SC) des cellules valides (23) reçues pour détecter une perte de cellules,

à transférer (29) (32) une cellule de bourrage (B) dans la file d'attente anti-gigue (22) lorsque celle-ci est vide et pour toute détection d'une cellule perdue,

à éliminer (27) toute cellule reçue tant que la file d'attente anti-gigue est pleine,

et à déterminer une valeur d'un écart ($\tau$m) entre les valeurs courante (pmc) et déterminée (pm) de la profondeur moyenne de remplissage pour, en fonction de la valeur et du signe de la valeur de l'écart, transférer un nombre déterminé de cellules de bourrage (B) ou éliminer un même nombre déterminé de cellules, ce nombre déterminé correspondant au nombre multiple du modulo du compteur SC.

3. Procédé selon la revendication 2, caractérisé en ce que le traitement (24) des numéros de séquence (SC) des cellules valides (23) reçues consiste à calculer un écart ($\Delta$SC) entre le compteur de séquence (SC) de cellules valides reçues et le compteur de cellules transmises (SCE) dans la file d'attente anti-gigue (22), cet écart déterminant le nombre de cellules de bourrage à transférer (29), dans la file d'attente anti-gigue, et en ce que le résultat de la comparaison (26) entre la valeur de l'écart ($\Delta$SC) et la place disponible dans la file d'attente anti-gigue (22) détermine si les cellules reçues sont purgées (27) ou transférées (30) dans la file d'attente anti-gigue (22).

4. Procédé selon l'une quelconque des revendications 1 et 2, caractérisé en ce que la valeur déterminée (pm) de la profondeur moyenne de remplissage est égale à la moitié de la profondeur maximale (pM) de remplissage.

5. Utilisation d'un procédé selon l'une quelconque des revendications précédentes pour maintenir l'intégrité binaire d'une information numérique formatée sous la forme de cellules ATM et transmise par un réseau du type ATM.

# FIG.1

EP 0 896 496 A1

| | 1 BIT | 3 BITS | 3 BITS | 1 BIT | | |
|---|---|---|---|---|---|---|
| EN-TÊTE ATM | CSI | SC | CRC | P | DONNÉES UTILES | C |

SN — SNP

| 5 OCTETS | 1 OCTET | 47 OCTETS |
|---|---|---|
| 18 | 19 | 20 |

# FIG.2

FIG.3

EP 0 896 496 A1

P(r)

r_m

r

## FIG.4

P(p)

p_m

p

## FIG.5

P(τ)

τ_m = 0

τ

## FIG.6

P(τ)

0    τ_m ≠ 0

P

τ

## FIG.7

EP 0 896 496 A1

$P(p)$

$P_m$　　$P$　　$P_{mc}$　　$P$

## FIG.8

$P(\tau)$

$\Delta$

$-(2^b-\Delta)$　$\tau_m$　$0$　$+(2^b-\Delta)$　　$\tau = SCT - SCE$

ESTIMATION: Perturbations $\geq 2^b$ cellules ┆ Perturbations $< 2^b$ cellules ┆ Perturbations $\geq 2^b$ cellules

ACTIONS    : Purge de $m \times 2^b$ cellules ┆ Bourrage de $n$ cellules ┆ Bourrage de $m \times 2^b$ cellules

## FIG.9

**FIG.10**

23 — ⟨ SCR EST VALIDE ? ⟩ — NON

OUI

24 — | ΔSC = SCR−(SCE+1) |

25 — | ΔSC = 0 ? |

26 — ⟨ (ΔSC+1) SATURE LA FILE D'ATTENTE ? ⟩

OUI

NON

27 — | _PURGER LA CELLULE REÇUE.<br>_SCE = INCHANGÉ. |

( SORTIE )

28 — ⟨ ΔSC = 0 ? ⟩ — NON

OUI

29 — | _TRANSFÉRER ΔSC CELLULES DE<br>BOURRAGE DANS LA FILE<br>D'ATTENTE "ANTI-GIGUE".<br>_SCE = SCE + ΔSC. |

30 — | _TRANSFÉRER LA CELLULE REÇUE<br>DANS LA FILE D'ATTENTE<br>"ANTI-GIGUE".<br>_SCE = SCE + 1. |

( SORTIE )

EP 0 896 496 A1

13

DÉBUT

31 —

FILE D'ATTENTE "ANTI-GIGUE" VIDE ?  NON

OUI

32 —

_TRANSFÉRER 1 CELLULE DE BOURRAGE DANS LA
 FILE D'ATTENTE "ANTI-GIGUE".
_SCE = SCE + 1.

33 —

TRANSFÉRER L'INFORMATION DE LA FILE D'ATTENTE
"ANTI-GIGUE" VERS LE RÉCEPTEUR.

SORTIE

# FIG.11

EP 0 896 496 A1

**Office européen des brevets**

**RAPPORT DE RECHERCHE EUROPEENNE**

Numéro de la demande

EP 98 40 1925

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 44 17 286 A (DEUTSCHE BUNDESPOST TELEKOM) 23 novembre 1995<br>* colonne 1, ligne 1 - colonne 2, ligne 10 *<br>* colonne 2, ligne 61 - colonne 3, ligne 11 * | 1,4,5 | H04Q11/04 |
| A | MERCANKOSK G ET AL: "CHARACTERIZATION OF A CBR CONNECTION OVER A CHANNEL WITH KNOWN BOUNDED DELAY VARIATION"<br>NETWORKING: FOUNDATION FOR THE FUTURE, SAN FRANCISCO, MAR. 28 - APR. 1, 1993,<br>vol. VOL. 3, no. CONF. 12, 28 mars 1993,<br>pages 1170-1177, XP000419680<br>INSTITUTE OF ELECTRICAL AND ELECTRONICS ENGINEERS<br>* page 1171, colonne de droite, ligne 26-28 *<br>* page 1174, colonne de droite, ligne 22-31 * | 1,2,5 | |
| A | HIROSHI UEMATSU ET AL: "IMPLEMENTATION AND EXPERIMENTAL RESULTS OF CLAD USING SRTS METHOD IN ATM NETWORKS"<br>PROCEEDINGS OF THE GLOBAL TELECOMMUNICATIONS CONFERENCE (GLOBECOM), SAN FRANCISCO, NOV. 28 - DEC. 2, 1994,<br>vol. VOL. 3, 28 novembre 1994, pages 1815-1821, XP000488836<br>INSTITUTE OF ELECTRICAL AND ELECTRONICS ENGINEERS<br>* alinéa 3.1 - alinéa 3.2 *<br>-/-- | 1,2,5 | **DOMAINES TECHNIQUES RECHERCHES (Int.Cl.6)**<br><br>H04Q |

Le présent rapport a été établi pour toutes les revendications

| Lieu de la recherche | Date d'achèvement de la recherche | Examinateur |
|---|---|---|
| LA HAYE | 16 novembre 1998 | Dhondt, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

15

**Office européen des brevets**

# RAPPORT DE RECHERCHE EUROPEENNE

Numéro de la demande

EP 98 40 1925

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | HITOSHI UEMATSU ET AL: "STM SIGNAL TRANSFER TECHNIQUES IN ATM NETWORKS" DISCOVERING A NEW WORLD OF COMMUNICATIONS, CHICAGO, JUNE 14 - 18, 1992, vol. VOL. 1, no. -, 14 juin 1992, pages 281-285, XP000326884 INSTITUTE OF ELECTRICAL AND ELECTRONICS ENGINEERS * le document en entier * | 1,2,5 | |
| A | TUTOMU MURASE ET AL: "CONSTANT BIT RATE SERVICES IN ATM NETWORKS" NEC RESEARCH AND DEVELOPMENT, vol. 32, no. 3, 1 juillet 1991, pages 379-388, XP000265881 * alinéa 4.2 * | 1,2,5 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 16 novembre 1998 | Dhondt, E |

EPO FORM 1503 03.82 (P04C02)